# EUROPEAN PATENT APPLICATION

(11) **EP 3 101 992 A1**
(43) Date of publication of application: **07.12.2016**
(21) Application number: 15743779.9
(22) Date of filing: 28.01.2015
(51) Int. Cl.: H04W 76/02, H04W 16/32, H04W 72/04

(54) **BASE STATION, USER TERMINAL, AND COMMUNICATION CONTROL METHOD**

(30) Priority: 31.01.2014 US 201461934209 P; 20.03.2014 US 201461956000 P
(71) Applicant: Kyocera Corporation, Kyoto-shi, Kyoto 612-8501 (JP)
(72) Inventor: NAGASAKA, Yushi, Kyoto-shi Kyoto 612-8501 (JP); FUJISHIRO, Masato, Kyoto-shi Kyoto 612-8501 (JP); MATSUMOTO, Naohisa, Kyoto-shi Kyoto 612-8501 (JP); MORITA, Kugo, Kyoto-shi Kyoto 612-8501 (JP); CHANG, Henry, San Diego, California 92123 (US)
(74) Representative: Schwabe - Sandmair - Marx
(86) International application number: PCT/JP2015/052307
(87) International publication number: WO 2015/115458

(57) **Abstract**

A base station according to a first aspect establishes an RRC connection with a user terminal. The base station includes a controller configured to determine whether to switch the RRC connection with the user terminal to neighboring base stations on the basis of whether the user terminal supports a dual connectivity scheme in which connections with a plurality of base stations are simultaneously established.

## Description

### TECHNICAL FIELD

The present invention relates to a base station, a user terminal, and a communication control method used in a mobile communication system.

### BACKGROUND ART

In 3GPP (3rd Generation Partnership Project), which is a standardization project of a mobile communication system, there is an ongoing consideration for effectively using a specific base station (for example, a small cell base station) that has a narrower coverage than a general base station (for example, a macro cell base station).

Furthermore, in 3GPP, the introduction of a dual connectivity scheme (Dual connectivity) is expected in Release 12 and thereafter (see Non Patent Document 1). In the dual connectivity scheme, the user terminal simultaneously establishes connections with a plurality of base stations (a general base station and a specific base station). Because radio resources are assigned to the user terminal from each base station, an improvement in throughput can be expected. It is noted that the dual connectivity scheme may be called an inter-base station carrier aggregation (inter-eNB CA).

### PRIOR ART DOCUMENTS

### NON PATENT DOCUMENT

Non Patent Document 1: 3GPP technical report "TR 36.842 V12.0.0" January 7, 2014

### SUMMARY OF INVENTION

In the dual connectivity scheme, among the plurality of base stations that establish connections with the user terminal, only one base station (hereinafter, called the "master base station") establishes an RRC connection with the user terminal. On the other hand, among the plurality of base stations, another base station (hereinafter, the "secondary base station") provides additional radio resources to the user terminal without establishing an RRC connection with the user terminal.

An object of the present invention is to enable enhancement of mobility in a dual connectivity scheme.

A base station according to a first aspect establishes an RRC connection with a user terminal. The base station includes a controller that determines whether to switch the RRC connection with the user terminal to neighboring base stations on the basis of whether the user terminal supports a dual connectivity scheme in which connections with a plurality of base stations are simultaneously established.

A communication control method according to a second aspect includes: a step A of starting, by a user terminal, communication according to a dual connectivity scheme, by setting a first base station as a master base station and setting a second base station as a secondary base station; and a step B of performing a procedure for changing roles of the master base station and the secondary base station, between the first base station and the second base station. The master base station is a base station that establishes an RRC connection with the user terminal in the dual connectivity scheme. The secondary base station is a base station that provides additional radio resources to the user terminal in the dual connectivity scheme.

A communication control method according to a third aspect is a method for controlling communication according to a dual connectivity scheme using a master base station that establishes an RRC connection with a user terminal and a secondary base station that provides additional radio resources to the user terminal. The communication control method includes: a step A of detecting a failure of a radio link with a cell of the secondary base station, by the user terminal; and a step B of transmitting a report regarding the failure, from the user terminal to the master base station. The secondary base station manages a secondary cell group consisting of a plurality of cells associated with the user terminal. The plurality of cells includes a special cell in which a physical uplink control channel of the user terminal is established. In the step B, the user terminal adds information regarding special cell to the report when the cell in which the failure is detected is the special cell.

A user terminal according to a fourth aspect is a user terminal to which additional radio resources are allocated by a secondary base station, and configured to establish a RRC connection with a master base station and perform a dual connectivity communication. The user terminal includes: a controller configured to detect a failure of radio link with a cell of the secondary base station, and transmit a report regarding the failure to the master base station. A secondary cell group is managed by the secondary base station, a secondary cell group consisting of a plurality of cells associated with the user terminal. The plurality of cells includes a special cell with which a physical uplink control channel of the user terminal is established. The controller is further configured to add information regarding the special cell to the report when the cell in which the failure is detected is the special cell.

### BRIEF DESCRIPTION OF DRAWINGS

[Fig. 1] Fig. 1 is a configuration diagram of an LTE system according to a first embodiment to a fifth embodiment.
[Fig. 2] Fig. 2 is a block diagram of a UE according to the first embodiment to the fifth embodiment.
[Fig. 3] Fig. 3 is a block diagram of an eNB according to the first embodiment to the fifth embodiment.
[Fig. 4] Fig. 4 is a protocol stack diagram of a radio interface according to the first embodiment to the fifth embodiment.
[Fig. 5] Fig. 5 is a configuration diagram of a radio frame according to the first embodiment to the fifth embodiment.
[Fig. 6] Fig. 6 is a diagram for illustrating an overview of a dual connectivity scheme.
[Fig. 7] Fig. 7 is a diagram illustrating a first UP architecture.
[Fig. 8] Fig. 8 is a diagram illustrating a second UP architecture.
[Fig. 9] Fig. 9 is a sequence diagram illustrating an operation of starting the dual connectivity scheme according to the first embodiment to the fifth embodiment.
[Fig. 10] Fig. 10 is a diagram illustrating an operation environment according to the first embodiment to the third embodiment.
[Fig. 11] Fig. 11 is a sequence diagram illustrating an operation pattern 1 according to the first embodiment.
[Fig. 12] Fig. 12 is a sequence diagram illustrating an operation pattern 2 according to the first embodiment.
[Fig. 13] Fig. 13 is a sequence diagram illustrating an operation pattern 1 according to the second embodiment.
[Fig. 14] Fig. 14 is a sequence diagram illustrating an operation according to the third embodiment.
[Fig. 15] Fig. 15 is a diagram illustrating an operation environment according to the fourth embodiment.
[Fig. 16] Fig. 16 is a sequence diagram illustrating an operation according to the fourth embodiment.
[Fig. 17] Fig. 17 is a flow diagram illustrating an operation according to a modification example of the fourth embodiment.
[Fig. 18] Fig. 18 is a sequence diagram illustrating an operation according to the fifth embodiment.
[Fig. 19] Fig. 19 is a diagram illustrating another operation according to the fifth embodiment.
[Fig. 20] Fig. 20 is a diagram illustrating an operation environment according to another embodiment.
[Fig. 21] Fig. 21 is a diagram according to additional statements of an embodiment.

### DESCRIPTION OF EMBODIMENTS

### [Overview of embodiments]

A base station according to a first embodiment and second embodiment establishes an RRC connection with a user terminal. The base station includes a controller that determines whether to switch the RRC connection with the user terminal to neighboring base stations on the basis of whether the user terminal supports a dual connectivity scheme in which connections with a plurality of base stations are simultaneously established.

In the first embodiment and the second embodiment, the base station according further includes a receiver that receives a terminal capability notification from the user terminal. The terminal capability notification includes information indicating whether or not the user terminal supports the dual connectivity scheme.

In the first embodiment, the base station is a specific base station having narrower coverage compared with a general base station. The general base station is included in the neighboring base stations. The controller decides to switch the RRC connection of the user terminal to the general base station in accordance with the user terminal supporting the dual connectivity scheme.

In the first embodiment, the base station further includes: a storage that stores an identifier of a cell of the general base station; and a receiver that receives a measurement report from the user terminal. The controller decides to switch the RRC connection of the user terminal to the general base station when the identifier of the cell of the general base station is included in the measurement report and the user terminal supports the dual connectivity scheme.

In the first embodiment, the controller decides whether to switch the RRC connection of the user terminal to the general base station on the basis of at least one of: a load status of the base station, a movement status of the user terminal, a communication status of the user terminal, and a backhaul delay, in addition to whether or not the user terminal supports the dual connectivity scheme.

In the second embodiment, the base station is a general base station having wider coverage compared with a specific base station. The specific base station is included in the neighboring base stations. The controller decides to not switch the RRC connection of the user terminal to the specific base station in accordance with the user terminal supporting the dual connectivity scheme.

In the second embodiment, the base station further includes: a storage that stores an identifier of a cell of the specific base station; and a receiver that receives a measurement report from the user terminal. The controller decides to not switch the RRC connection of the user terminal to the specific base station when the identifier of the cell of the specific base station is included in the measurement report and the user terminal supports the dual connectivity scheme.

In the second embodiment, the controller decides to start communication according to the dual connectivity scheme together with the specific base station without switching the RRC connection of the user terminal to the specific base station when the identifier of the cell of the specific base station is included in the measurement report and the user terminal supports the dual connectivity scheme.

In the second embodiment, the controller decides whether to switch the RRC connection of the user terminal to the specific base station on the basis of at least one of: a load status of the base station, a movement status of the user terminal, a communication status of the user terminal, and a backhaul delay, in addition to whether or not the user terminal supports the dual connectivity scheme.

A communication control method according to a third embodiment and a fourth embodiment includes: a step A of starting, by a user terminal, communication according to a dual connectivity scheme, by setting a first base station as a master base station and setting a second base station as a secondary base station; and a step B of performing a procedure for changing roles of the master base station and the secondary base station, between the first base station and the second base station. The master base station is a base station that establishes an RRC connection with the user terminal in the dual connectivity scheme. The secondary base station is a base station that provides additional radio resources to the user terminal in the dual connectivity scheme.

In the third embodiment, the first base station is a specific base station having narrower coverage compared with a general base station. The second base station is the general base station.

In the third embodiment, the step B includes: a step of transmitting a change request for requesting change of the roles to the second base station, from the first base station set as the master base station.

In the third embodiment, the first base station decides whether to transmit the change request to the second base station, on the basis of at least one of: a load status of the first base station, a movement status of the user terminal, and a communication status of the user terminal.

In the third embodiment, the change request includes information for establishing an RRC connection with the user terminal by the second base station.

In the third embodiment, the step B includes: a step of performing a handover of the user terminal from the first base station to the second base station. In the handover, the user terminal omits a random access procedure to the second base station.

In the fourth embodiment, the first base station is a general base station. The second base station is a specific base station having narrower coverage compared with the general base station.

In the fourth embodiment, the communication control method further includes a step of releasing the first base station set as the secondary base station, by the second base station set as the master base station, after changing the roles.

A communication control method according to a fifth embodiment is a method for controlling communication according to a dual connectivity scheme using a master base station that establishes an RRC connection with a user terminal and a secondary base station that provides additional radio resources to the user terminal. The communication control method includes: a step A of detecting a failure of a radio link with a cell of the secondary base station, by the user terminal; and a step B of transmitting a report regarding the failure, from the user terminal to the master base station. The secondary base station manages a secondary cell group consisting of a plurality of cells associated with the user terminal. The plurality of cells includes a special cell in which a physical uplink control channel of the user terminal is established. In the step B, the user terminal adds information regarding the special cell to the report when the cell in which the failure is detected is the special cell.

In the fifth embodiment, the communication control method further includes a step of causing, by the master base station, the user terminal to stop uplink transmissions to the plurality of cells when the report includes the special cell information.

### [First embodiment]

Hereinafter, an embodiment for applying the present invention to an LTE system is explained.

### (System configuration)

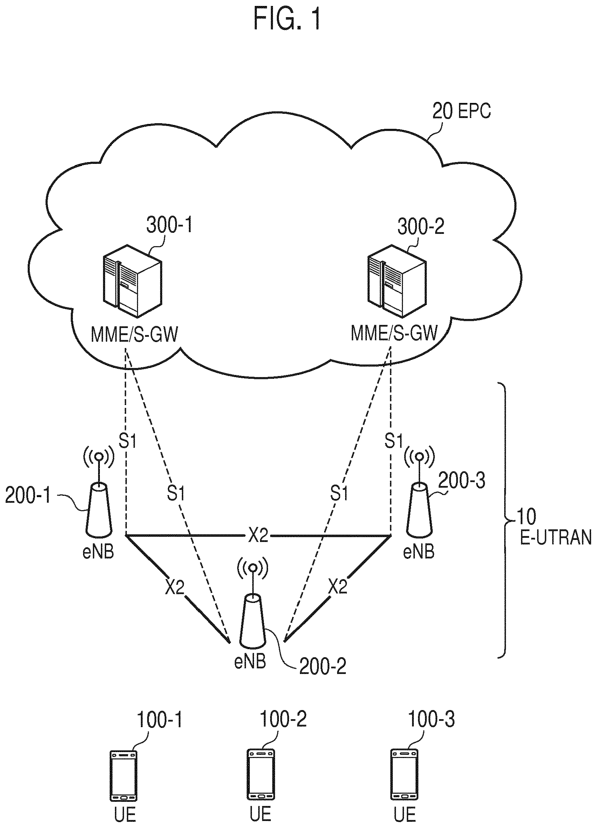

Fig. 1 is a configuration diagram of the LTE system according to the first embodiment.

As illustrated in Fig. 1, the LTE system according to the first embodiment includes UE (User Equipment) 100, E-UTRAN (Evolved-UMTS Terrestrial Radio Access Network) 10, and EPC (Evolved Packet Core) 20.

The UE 100 corresponds to a user terminal. The UE 100 is a mobile communication device, which performs radio communication with a cell (a serving cell). The configuration of the UE 100 will be described later.

The E-UTRAN 10 corresponds to a radio access network. The E-UTRAN 10 includes an eNB 200 (an evolved Node-B). The eNB 200 corresponds to a base station. The eNBs 200 are connected mutually via an X2 interface. The configuration of the eNB 200 will be described later.

The eNB 200 manages one or a plurality of cells, and performs radio communication with the UE 100 that establishes a connection with a cell of the eNB 200. The eNB 200 has a radio resource management (RRM) function, a routing function of user data, a measurement control function for mobility control and scheduling and the like. The "cell" is used as a term indicating a smallest unit of a radio communication area, and is also used as a term indicating a function of performing radio communication with the UE 100.

The EPC 20 corresponds to a core network. The EPC 20 includes an MME (Mobility Management Entity)/S-GW (Serving-Gateway) 300. The MME performs different types of mobility control and the like for the UE 100. The S-GW performs transfer control of the user data. The MME/S-GW 300 is connected to the eNB 200 via an S1 interface.

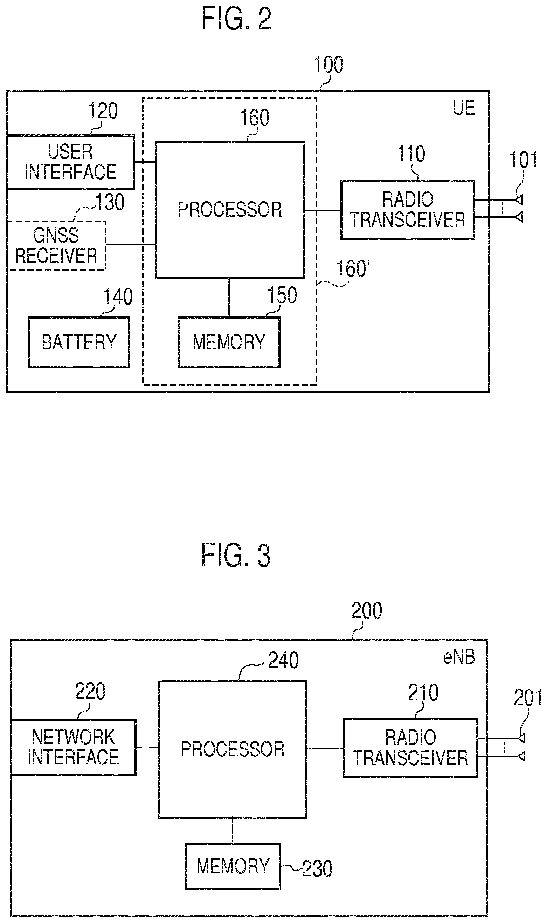

Fig. 2 is a block diagram of the UE 100. As illustrated in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 and the processor 160 configure a control unit. The UE 100 may not necessarily include the GNSS receiver 130. Furthermore, the memory 150 may be integrally formed with the processor 160, and this set (that is, a chip set) may be called a processor 160'.

The antenna 101 and the radio transceiver 110 are used to transmit and receive a radio signal. The radio transceiver 110 converts a baseband signal (a transmission signal) output from the processor 160 into a radio signal, and transmits the radio signal from the antenna 101. Furthermore, the radio transceiver 110 converts a radio signal received by the antenna 101 into a baseband signal (a reception signal), and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for processing by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various types of processes and various communication protocols described later.

Fig. 3 is a block diagram of the eNB 200. As illustrated in Fig. 3, the eNB 200 includes a plurality of antennas 201, a radio transceiver 210, a network interface 220, a memory 230, and a processor 240. The memory 230 and the processor 240 configure a control unit. Furthermore, the memory 230 may be integrally formed with the processor 240, and this set (that is, a chipset) may be called a processor.

The antenna 201 and the radio transceiver 210 are used to transmit and receive a radio signal. The radio transceiver 210 converts a baseband signal (a transmission signal) output from the processor 240 into a radio signal, and transmits the radio signal from the antenna 201. Furthermore, the radio transceiver 210 converts a radio signal received by the antenna 201 into a baseband signal (a reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for processing by the processor 240. The processor 240 includes a baseband processor that performs modulation and demodulation, encoding and decoding and the like on the baseband signal and a CPU that performs various types of processes by executing the program stored in the memory 230. The processor 240 executes various types of processes and various communication protocols described later.

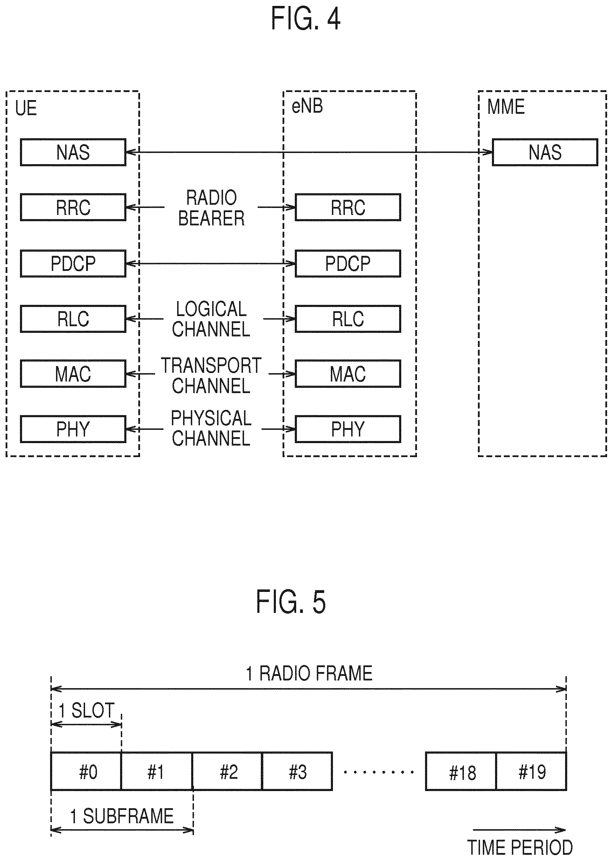

Fig. 4 is a protocol stack diagram of a radio interface in the LTE system. As shown in Fig. 4, the radio interface protocol is classified into a first layer to a third layer of an OSI reference model, such that the first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs encoding and decoding, modulation and demodulation, antenna mapping and demapping, and resource mapping and demapping. Between the physical layer of the UE 100 and the physical layer of the eNB 200, user data and control signals are transmitted via a physical channel.

The MAC layer performs priority control of data, a retransmission process by a hybrid ARQ (HARQ), a random access procedure during the establishment of an RRC connection, and the like. Between the MAC layer of the UE 100 and the MAC layer of the eNB 200, user data and control signals are transmitted via a transport channel. The MAC layer of the eNB 200 includes a scheduler for determining a transport format (a transport block size and a modulation and coding scheme) of an uplink and a downlink, and a resource block to be assigned to the UE 100.

The RLC layer transmits data to an RLC layer of a reception side by using the functions of the MAC layer and the physical layer. Between the RLC layer of the UE 100 and the RLC layer of the eNB 200, user data and control signals are transmitted via a logical channel.

The PDCP layer performs header compression and decompression, and encryption and decryption.

The RRC layer is defined only in a control plane that handles control signals. Between the RRC layer of the UE 100 and the RRC layer of the eNB 200, a control signal (an RRC message) for various types of settings is transmitted. The RRC layer controls the logical channel, the transport channel, and the physical channel according to the establishment, re-establishment, and release of a radio bearer. When there is a connection (an RRC connection) between the RRC of the UE 100 and the RRC of the eNB 200, the UE 100 is in an RRC connected state. Otherwise, the UE 100 is in an RRC idle state.

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As illustrated in Fig. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. Of the radio resources (time and frequency resources) assigned to the UE 100, a frequency resource can be identified by a resource block and a time resource can be identified by a sub frame (or a slot).

In the downlink, an interval of several symbols at the head of each subframe is a region used as a physical downlink control channel (PDCCH) for mainly transmitting a control signal. Furthermore, the remaining interval of each subframe is a region available as a physical downlink shared channel (PDSCH) for mainly transmitting user data.

In the uplink, both ends in the frequency direction of each subframe are regions used as a physical uplink control channel (PUCCH) for mainly transmitting a control signal. The other portion in each subframe is a region available as a physical uplink shared channel (PUSCH) for mainly transmitting user data.

### (Dual connectivity scheme)

The LTE system according to the first embodiment supports a dual connectivity scheme. The dual connectivity scheme is expected to be introduced in Release 12 and thereafter. In the dual connectivity scheme, the UE 100 simultaneously establishes a connection with a plurality of eNBs 200. Because a radio resource is assigned to the UE 100 from each eNB 200, an improvement in throughput can be expected. It is noted that the dual connectivity scheme may be called an inter-eNB 200 carrier aggregation (inter-eNB CA).

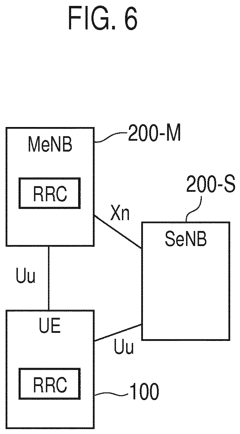

Fig. 6 is a diagram for illustrating an overview of a dual connectivity scheme.

As shown in Fig. 6, in the dual connectivity scheme, of the plurality of eNBs 200 that establish a connection with the UE 100, only the master eNB (MeNB) 200-M establishes an RRC connection with the UE 100. On the other hand, of the plurality of eNBs 200, the secondary eNB (SeNB) 200-S provides an additional radio resource to the UE 100 without establishing an RRC connection with the UE 100. In other words, the MeNB 200-M establishes not only a user plane connection, but also a control plane connection with the UE 100. On the other hand, the SeNB 200-S establishes a user plane connection with the UE 100, without establishing a control plane connection with the UE 100. The SeNB 200-S may include an RRM function.

An Xn interface is set between the MeNB 200-M and the SeNB200-S. The Xn interface is either an X2 interface or a new interface.

In the dual connectivity scheme, the UE 100 is capable of carrier aggregation using N number of cells managed by the MeNB 200-M and M number of cells managed by the SeNB 200-S, simultaneously. In the dual connectivity scheme, the maximum number serving cells of the UE 100, that is, the maximum number of (N + M) is five, for example. Here, the group composed of N number of cells managed by the MeNB 200-M is called a master cell group (MCG). Moreover, the group composed of M number of cells managed by the SeNB 200-S is called a secondary cell group (SCG). In the SCG, a special cell provided with a PUCCH of the UE 100 is set. The special cell performs some of the functions of the primary cell (PCell) in carrier aggregation. Hereinafter, the special cell shall be called the DC special cell.

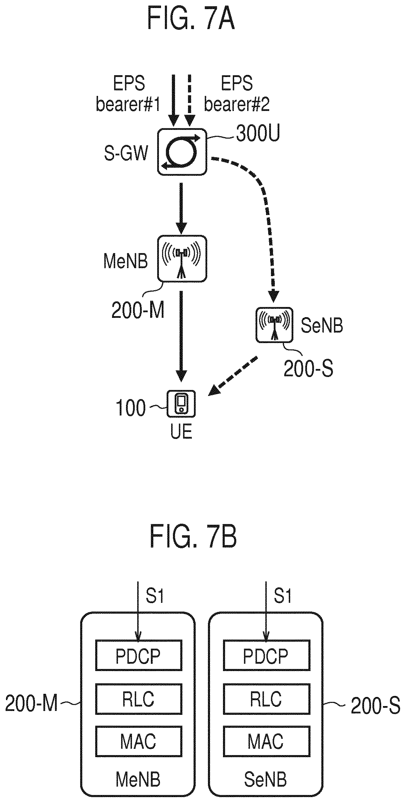

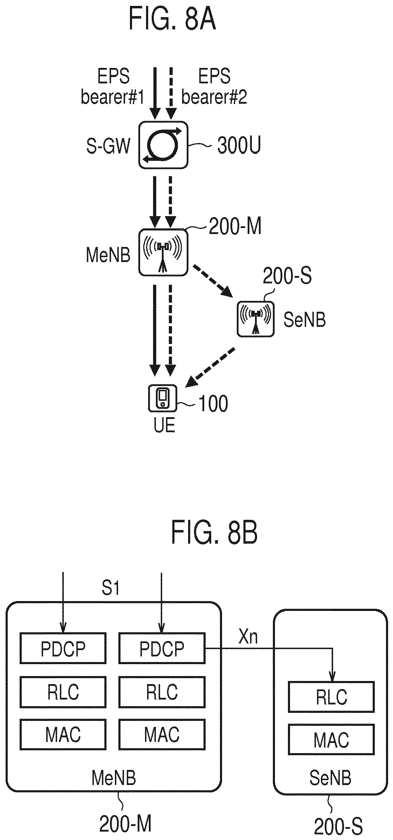

Fig. 7 and Fig. 8 are diagrams for explaining a configuration format of the transfer route (the data path) of user data in a dual connectivity scheme. There are mainly two user plane architectures (UP architectures) constituting the transfer route (data path) of user data in the dual connectivity scheme.

Fig. 7 illustrates a first UP architecture. As shown in Fig. 7A, in the first UP architecture, an SI-U interface between the MeNB 200-M and the S-GW 300U, and an S1-U interface between the SeNB 200-S and the S-GW 300U are used. An EPS bearer #1 between the UE 100 and the P-GW passes through the S1-U interface between the MeNB 200-M and the S-GW 300U. An EPS bearer #2 between the UE 100 and the P-GW passes through the S1-U interface between the SeNB 200-S and the S-GW 300U. Thus, in the first UP architecture, the data path between the SeNB 200-S and S-GW 300U does not pass through the MeNB 200-M. As shown in Fig. 7B, both the MeNB 200-M and the SeNB 200-S perform the processing of each layer of PDCP, RLC, and MAC.

Fig. 8 illustrates a second UP architecture. As shown in Fig. 8A, in the second UP architecture, the EPS bearer #2 between the UE 100 and the P-GW is divided in the MeNB 200-M, and while one of the divided parts (a split bearer) terminates in the UE 100 after passing through the SeNB 200-S, the other divided part (a split bearer) terminates in the UE 100 without passing through the SeNB 200-S. Thus, in the second UP architecture, the data path between the SeNB 200-S and S-GW 300U passes through the MeNB 200-M. As shown in Fig. 8B, in one of the divided parts (split bearer) of the EPS bearer #2, the processing of each layer is performed by the PDCP of the MeNB 200-M and the RLC and MAC of the SeNB 200-S. Alternatively, in the split bearer, the MeNB 200-M may take charge up to the RLC (or some functions of the RLC).

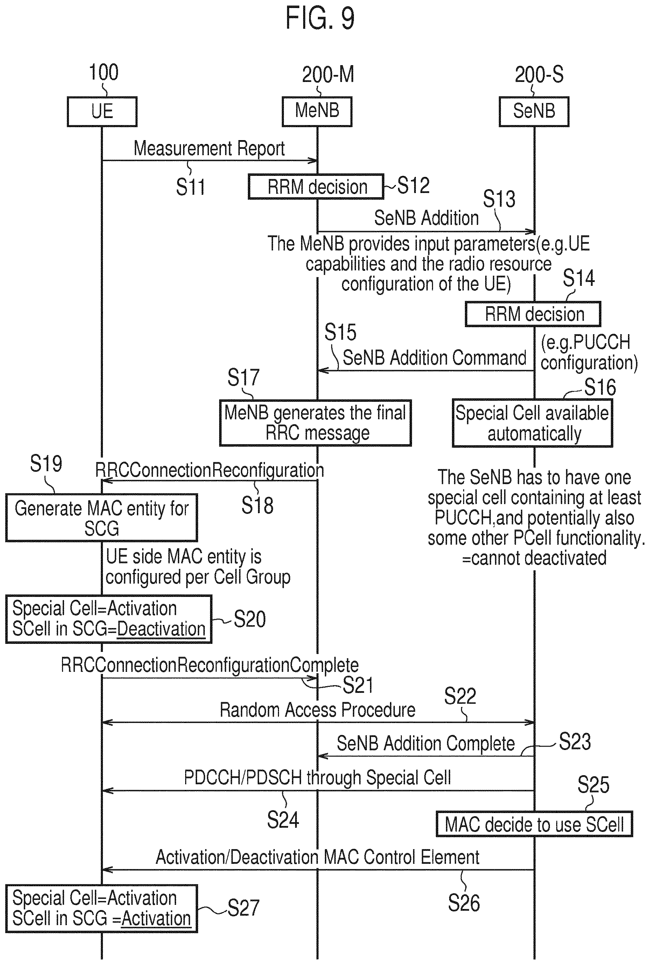

Fig. 9 is a sequence diagram illustrating an operation of starting the dual connectivity scheme. In the initial state of Fig. 9, the UE 100 establishes an RRC connection with the MeNB 200-M.

As shown in Fig. 9, in step S11, the UE 100 transmits, to the MeNB 200-M, a measurement report including the measurement result determined for each cell in the UE 100. The measurement result includes a combination of an identifier of the measurement cell and the reference signal received power (RSRP)/reference signal reception quality (RSRQ).

In step S12, the MeNB 200-M having received the measurement report, decides the use of the SeNB resource on the basis of the received measurement report.

In step S13, the MeNB 200-M transmits, to the SeNB 200-S, an SeNB addition request (SeNB Addition) for requesting resource assignment to the UE 100. The SeNB addition request includes various parameters concerning the UE 100.

In step S14, the SeNB 200-S having received the SeNB addition request, determines whether or not to authorize resource assignment to the UE 100 on the basis of the received SeNB addition request. When resource assignment to the UE 100 is authorized, the SeNB 200-S sets the radio resource (for example, the DC special cell) for the UE 100. The SeNB 200-S may select the random access preamble to be assigned to the UE 100.

In step S15, the SeNB 200-S transmits, to the MeNB 200-M, an SeNB addition instruction that provides a new radio resource configuration (for example, a configuration of the DC special cell, or a random access preamble configuration).

In step S16, the SeNB 200-S sets a DC special cell in accordance with the new radio resource configuration. The order of step S 15 and step S16 may be reverse.

In step S17, the MeNB 200-M having received the SeNB addition instruction, generates an RRC message to be transmitted to the UE 100 on the basis of the received SeNB addition instruction.

In step S18, the MeNB 200-M transmits, to the UE 100, the generated RRC message (an RRC reestablishment message).

In step S19, the UE 100 having received the RRC reestablishment message, generates a MAC entity corresponding to the SCG on the basis of the received RRC reestablishment message. Here, the DC special cell included in the SCG is in an activated state, and the other cells included in the SCG are in a deactivated state (step S20).

In step S21, the UE 100 transmits, to the MeNB 200-M, an RRC reestablishment completion message indicating the completion of RRC reestablishment.

In step S22, the UE 100 performs a random access to the SeNB 200-S.

In step S23, the SeNB 200-S detects synchronization with the UE 100, and transmits a notification indicating that the new radio resource configuration can be used (SeNB Addition complete) to the MeNB 200-M.

In step S24, the SeNB 200-S uses the DC special cell to transmit a downlink control signal to the UE 100 on the PDCCH, and transmit downlink user data to the UE 100 on the PDSCH.

In step S25, the SeNB 200-S decides to start the use of other cells included in the SCG, in the MAC layer.

In step S26, the SeNB 200-S transmits, to the UE 100, a MAC control element indicating the activation of other cells included in the SCG

In step S27, the UE 100 having received the MAC control element activates the other cells included in the SCG on the basis of the received MAC control element.

### (Operation according to first embodiment)

### (1) Operation overview

In the first embodiment, a scenario in which the master cell is a macro cell, and the secondary cell is a cell having a narrower coverage (a small cell) than the macro cell, is considered in most cases. Here, the small cell is a pico cell, a femto cell and the like, for example, and has a coverage that overlaps at least a part of the coverage of the macro cell.

In this way, by setting a cell having a wide coverage as the master cell, it becomes possible to support the movement of the UE 100 in an RRC connected state, that is, it becomes possible to enhance mobility. Specifically, when the UE 100 that communicates according to the dual connectivity scheme establishes an RRC connection with a small cell, along with the movement of the UE 100, it becomes necessary to perform processing (a handover and the like) for switching the RRC connection to a macro cell. Thus, in the first embodiment, control is performed to enable communication according to the dual connectivity scheme such that the master cell is a macro cell and the secondary cell is a small cell.

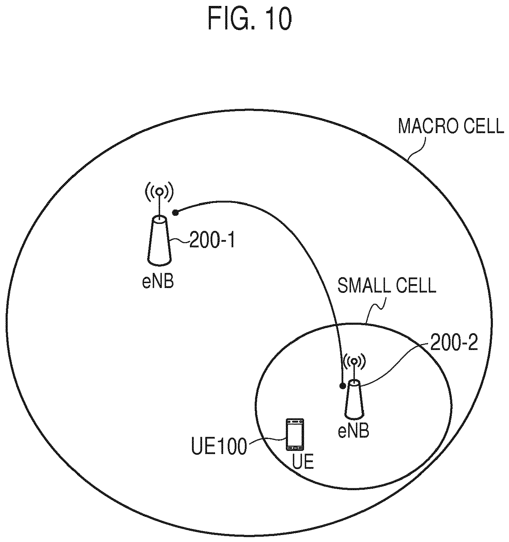

Fig. 10 is a diagram illustrating an operation environment according to the first embodiment.

As illustrated in Fig. 10, the eNB 200-1 manages a macro cell. The eNB 200-2 manages a small cell. The eNB 200-1 and the eNB 200-2 are mutually connected through a backhaul (the Xn interface). The small cell has a coverage that overlaps at least a part of the coverage of the macro cell. The UE 100 is positioned within an area where the coverage of the macro cell overlaps the coverage of the small cell. The UE 100 conforms to the specifications of Release 12 and thereafter, and supports the dual connectivity scheme.

In the first embodiment, the eNB 200-2 that manages the small cell establishes an RRC connection with the UE 100. On the basis of whether or not the UE 100 supports the dual connectivity scheme by which connections are established simultaneously with a plurality of eNBs 200, the eNB 200-2 determines whether or not to switch the RRC connection of the UE 100 to the neighboring eNB (eNB 200-1).

More particularly, the eNB 200-2 receives a terminal capability notification (UE Capability Information) from the UE 100. The terminal capability notification includes information indicating whether or not the UE 100 supports the dual connectivity scheme. The eNB 200-2 decides to switch the RRC connection of the UE 100 to the eNB 200-1 in accordance with the UE 100 supporting the dual connectivity scheme. Here, the switching of the RRC connection of the UE 100 to the eNB 200-1 means a handover or redirection of the UE 100 to the eNB 200-1, however, hereinafter, a handover is explained.

In this way, for a UE 100 supporting the dual connectivity scheme, control is performed to switch the RRC connection from the small cell (the eNB 200-2) to the macro cell (the eNB 200-1). Thus, the UE 100 can perform communication according to the dual connectivity scheme, whereby the master cell (MeNB) is handled as the macro cell (eNB 200-1) and the secondary cell (SeNB) is handled as the small cell (eNB 200-2). Therefore, it becomes possible to enhance mobility in the dual connectivity scheme.

In the first embodiment, the eNB 200-2 stores (a list of) identifiers of the cells of the eNB 200-1. The eNB 200-2 may acquire (the list of) cell identifiers of the eNB 200-1 from the OAM. Moreover, the eNB 200-2 receives a measurement report from the UE 100.

In the operation pattern 1 according to the first embodiment, the eNB 200-2 receives a UE capability notification from the UE 100, and if it is determined that the UE 100 supports the dual connectivity scheme, the RRC connection of the UE 100 is immediately switched to the eNB 200-1. For example, in the operation pattern 1, if the identifier of the cell of the eNB 200-1 is included in the measurement report, and the UE 100 supports the dual connectivity scheme, the eNB 200-2 decides that the RRC connection of the UE 100 is to be switched to the eNB 200-1. Alternatively, if the eNB 200-2 understands that the eNB 200-2 (the small cell) is within the coverage of the eNB 200-1 (the macro cell), the eNB 200-2 may decide to switch the RRC connection of the UE 100 to the eNB 200-1 regardless of the measurement report.

In the operation pattern 2 according to the first embodiment, the eNB 200-2 decides whether or not to switch the RRC connection of the UE 100 to the eNB 200-1 on the basis of at least one of the load status of the eNB 200-2, the movement status of the UE 100, and the communication status of the UE 100, in addition to whether or not the UE 100 supports the dual connectivity scheme.

### (2) Operation pattern 1

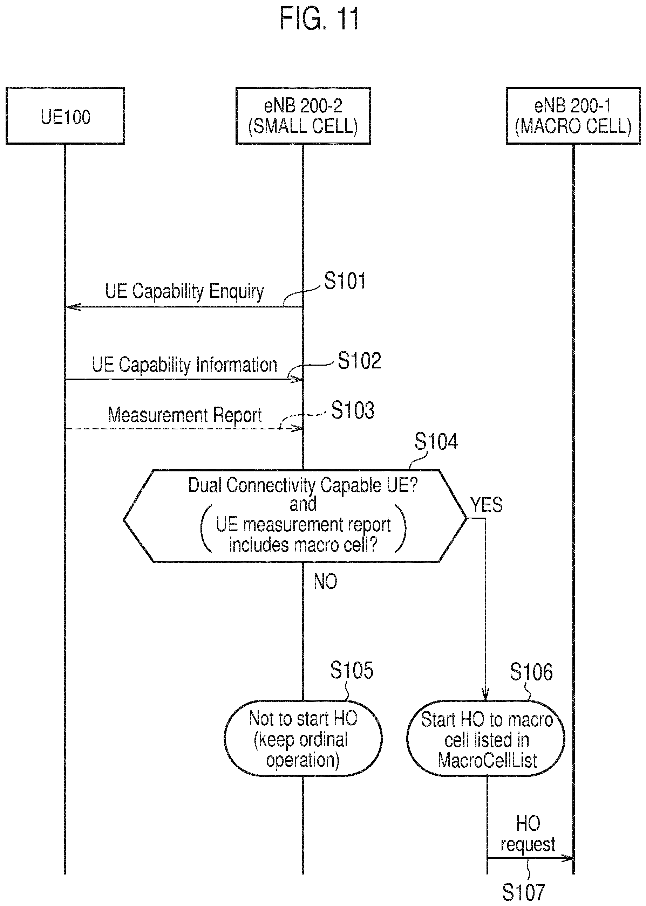

Fig. 11 is a sequence diagram illustrating an operation pattern 1 according to the first embodiment. In the initial state of Fig. 11, the UE 100 establishes an RRC connection with the eNB 200-2.

As shown in Fig. 11, in step S101, the eNB 200-2 inquires the UE 100 regarding whether or not the dual connectivity scheme is supported. More particularly, the eNB 200-2 transmits, to the UE 100, a transmission request for a UE capability notification (UE Capability Information) concerning whether or not the UE 100 supports the dual connectivity scheme.

In step S102, the UE 100 transmits, to the eNB 200-2, a UE capability notification in response to the request from the eNB 200-2.

In step S103, the UE 100 transmits a measurement report to the eNB 200-2.

In step S104, on the basis of the UE capability notification received from the UE 100, the eNB 200-2 decides whether or not the UE 100 supports the dual connectivity scheme. Moreover, the eNB 200-2 decides whether or not the identifier of the cell (the macro cell) of the eNB 200-1 is included in the measurement report.

If the identifier of the cell of the eNB 200-1 is included in the measurement report, and the UE 100 supports the dual connectivity scheme (step S104; YES), then in step S106, the eNB 200-2 decides that the RRC connection of the UE 100 is to be switched to the eNB 200-1, and starts the handover procedure of the UE 100 to the eNB 200-1. More particularly, the eNB 200-2 transmits a handover request to the eNB 200-1 (step S107). After the handover is complete, the eNB 200-1 adds the eNB 200-2 as the SeNB, due to which the application of the dual connectivity scheme can be started.

On the other hand, in the case of "NO" in step S104, the eNB 200-2 does not start the handover procedure of the UE 100 to the eNB 200-1, in step S105.

### (3) Operation pattern 2

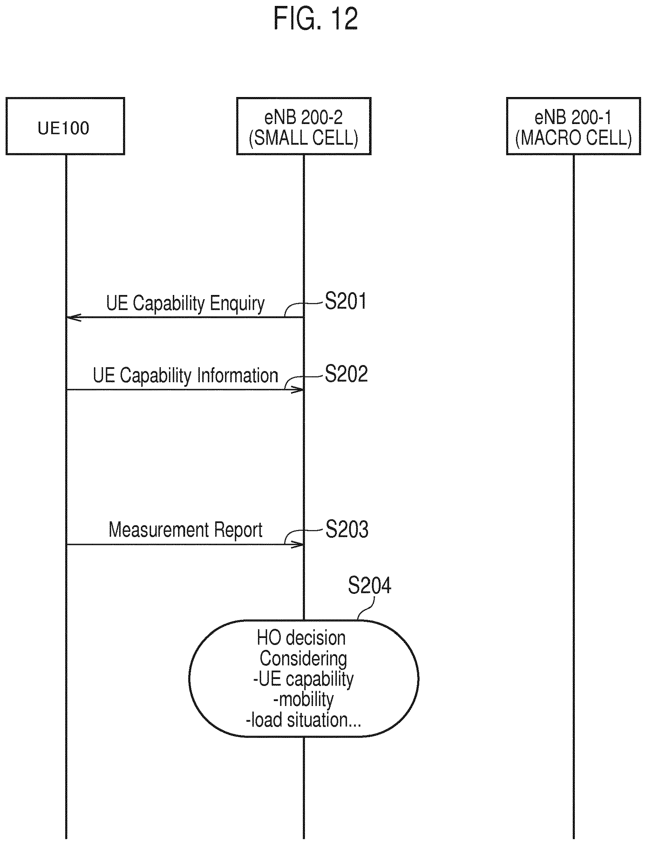

Fig. 12 is a sequence diagram illustrating the operation pattern 2 according to the first embodiment. In the initial state of Fig. 12, the UE 100 establishes an RRC connection with the eNB 200-2. In this case, the differences from the above-described operation pattern 1 will be mainly described.

As shown in Fig. 12, in step S201, the eNB 200-2 inquires the UE 100 regarding whether or not the dual connectivity scheme is supported.

In step S202, the UE 100 transmits, to the eNB 200-2, a UE capability notification in response to the request from the eNB 200-2.

In step S203, the UE 100 transmits a measurement report to the eNB 200-2.

In step S204, the eNB 200-2 decides whether or not to switch the RRC connection of the UE 100 to the eNB 200-1 on the basis of at least one of the load status of the eNB 200-2, the movement status of the UE 100, and the communication status of the UE 100, in addition to whether or not the UE 100 supports the dual connectivity scheme. More particularly, in addition to the deciding method in operation pattern 1, the deciding method shown below is applied.

For example, if the UE 100 is in a stationary state or a state close to that, the necessity of taking into consideration the mobility of the UE 100 is small. Thus, if the UE 100 is in a stationary state or a state close to that, the eNB 200-2 may add the eNB 200-1 as the SeNB without handing over the UE 100 to the eNB 200-1, and may start the application of the dual connectivity scheme. A well-known method of using radio parameters (such as the doppler frequency and the fading speed) can be used as a method of understanding the movement status of the UE 100, for example.

Alternatively, if the UE 100 can transmit and receive only a small amount of traffic, the necessity of improving the throughput by the dual connectivity scheme is small. Thus, if the UE 100 can transmit and receive only a small amount of traffic, the eNB 200-2 may continue with the normal communication without handing over the UE 100 to the eNB 200-1. As a method of understanding the communication status of the UE 100, a well-known method of using the application information can be used, for example.

Alternatively, if the load level of the eNB 200-2 is low, and sufficient free radio resources exist for the UE 100, the necessity of securing a radio resource by the dual connectivity scheme is small. Thus, if the load level of the eNB 200-2 is low, the eNB 200-2 may continue with the normal communication without handing over the UE 100 to the eNB 200-1.

In addition, the eNB 200-2 may take into consideration the delay time of backhaul (the Xn interface). For example, if the second UP architecture described above is assumed, it is not preferable to apply the dual connectivity scheme when the delay time of the Xn interface with the eNB 200-1 is large. Thus, if the delay time of the Xn interface is large, the eNB 200-2 may continue with the normal communication without handing over the UE 100 to the eNB 200-1.

### [Modification of first embodiment]

In the first embodiment described above, the eNB 200-2 received a UE capability notification from the UE 100.

However, if the eNB 200-2 receives context information of the UE 100 during a handover from another eNB to the eNB 200-2, and the UE capability notification is included in the context information, the eNB 200-2 may use the UE capability notification included in the context information.

### [Second embodiment]

Hereinafter, the second embodiment will be described while focusing on differences from the first embodiment. A system configuration and an operation environment according to the second embodiment are the same as those in the first embodiment.

In the first embodiment, the handover control was performed from the eNB 200-2 (the small cell) to the eNB 200-1 (the macro cell), while taking into consideration the capability of the UE 100 with regard to the dual connectivity scheme.

In contrast, in the second embodiment, the handover control is performed from the eNB 200-1 (the macro cell) to the eNB 200-2 (the small cell), while taking into consideration the capability of the UE 100 with regard to the dual connectivity scheme.

### (1) Operation overview

In the second embodiment, the eNB 200-1 that manages the macro cell establishes an RRC connection with the UE 100. The eNB 200-2 receives a terminal capability notification (UE Capability Information) from the UE 100. The eNB 200-1 decides to not switch the RRC connection of the UE 100 to the eNB 200-2 in accordance with the UE 100 supporting the dual connectivity scheme.

Moreover, the eNB 200-1 stores the identifier of the cell of the eNB 200-2. The eNB 200-1 receives the measurement report from the UE 100. If the identifier of the cell of the eNB 200-2 is included in the measurement report, and the UE 100 supports the dual connectivity scheme, the eNB 200-1 decides that the RRC connection of the UE 100 is not to be switched to the eNB 200-2.

Moreover, if the identifier of the cell of the eNB 200-2 is included in the measurement report, and the UE 100 supports the dual connectivity scheme, the eNB 200-1 adds the eNB 200-2 as the SeNB and starts the communication of the dual connectivity scheme without switching the RRC connection of the UE 100 to the eNB 200-2.

In addition, the eNB 200-1 may decide whether or not to switch the RRC connection of the UE 100 to the eNB 200-2 on the basis of at least any one of the load status of the eNB 200-1 (the local base station), the movement status of the UE 100, and the communication status of the UE 100, in addition to whether or not the UE 100 supports the dual connectivity scheme.

### (2) Operation pattern 1

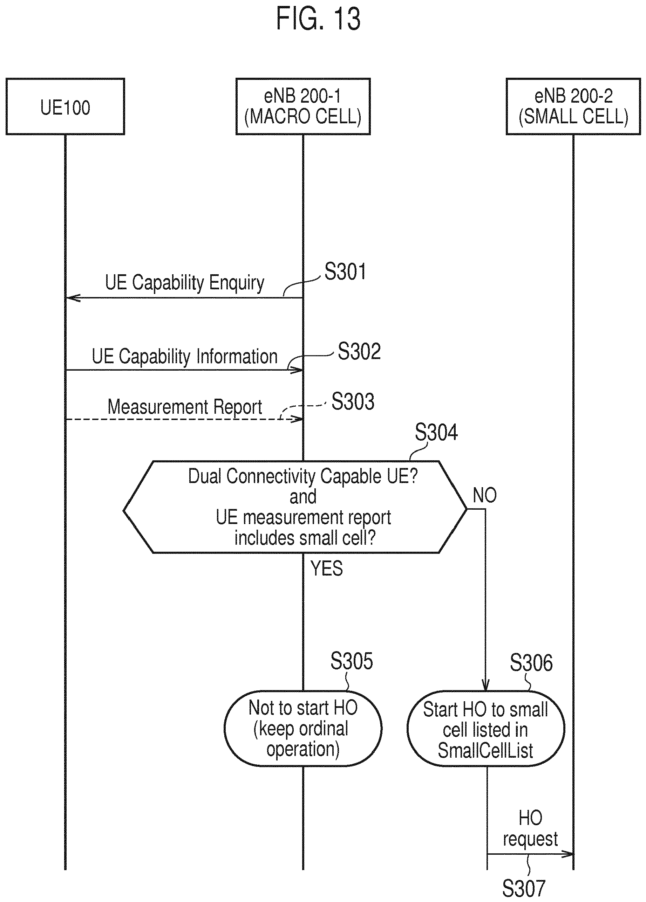

Fig. 13 is a sequence diagram illustrating the operation pattern 1 according to the second embodiment. In the initial state of Fig. 13, the UE 100 establishes an RRC connection with the eNB 200-1.

As shown in Fig. 13, in step S301, the eNB 200-1 inquires the UE 100 regarding whether or not the dual connectivity scheme is supported. More particularly, the eNB 200-1 transmits, to the UE 100, a transmission request for a UE capability notification (UE Capability Information) concerning whether or not the UE 100 supports the dual connectivity scheme.

In step S302, the UE 100 transmits, to the eNB 200-1, a UE capability notification in response to the request from the eNB 200-1.

In step S303, the UE 100 transmits a measurement report to the eNB 200-1.

In step S304, on the basis of the UE capability notification received from the UE 100, the eNB 200-1 decides whether or not the UE 100 supports the dual connectivity scheme. Moreover, the eNB 200-1 decides whether or not the identifier of the cell (the small cell) of the eNB 200-2 is included in the measurement report.

If the identifier of the cell of the eNB 200-2 is included in the measurement report, and the UE 100 supports the dual connectivity scheme (step S304; YES), then in step S305, the eNB 200-1 does not start the handover procedure of the UE 100 to the eNB 200-2 (the small cell). In addition, the eNB 200-1 may add the eNB 200-2 as the SeNB and start the application of the dual connectivity scheme.

On the other hand, in the case of "NO" in step S304, more particularly, if the identifier of the cell of the eNB 200-2 is included in the measurement report, and the UE 100 does not support the dual connectivity scheme, the eNB 200-1 may decide to switch the RRC connection of the UE 100 to the eNB 200-2, in step S306. In such a case, the handover procedure of the UE 100 to the eNB 200-2 is started, and a handover request is transmitted to the eNB 200-2 (step S307).

### (3) Operation pattern 2

In the operation pattern 2 according to the second embodiment, the eNB 200-1 decides whether or not to switch the RRC connection of the UE 100 to the eNB 200-2 on the basis of at least any one of the load status of the eNB 200-1 (the local base station), the movement status of the UE 100, and the communication status of the UE 100, in addition to whether or not the UE 100 supports the dual connectivity scheme.

For example, if the UE 100 is in a high-speed movement status, or a status close to that, the eNB 200-1 may continue with the normal communication without handing over the UE 100 to the eNB 200-2. Alternatively, if the UE 100 transmits or receives a large amount of traffic, the eNB 200-1 may add the eNB 200-2 as the SeNB without handing over the UE 100 to the eNB 200-2, and may start the application of the dual connectivity scheme. Else, if the load level of the eNB 200-1 is high and sufficient free radio resources do not exist for the UE 100, the eNB 200-1 may add the eNB 200-2 as the SeNB without handing over the UE 100 to the eNB 200-2, and may start the application of the dual connectivity scheme.

In addition, the eNB 200-1 may take into consideration the delay time of backhaul (the Xn interface). For example, if the second UP architecture described above is assumed, it is not preferable to apply the dual connectivity scheme when the delay time of the Xn interface with the eNB 200-2 is large. Thus, if the delay time of the Xn interface is large, the eNB 200-1 may decide that the dual connectivity scheme is inappropriate and hand over the UE 100 to the eNB 200-2.

### [Modification of second embodiment]

In the second embodiment described above, the eNB 200-1 received a UE capability notification from the UE 100.

However, if the eNB 200-1 receives the context information of the UE 100 during a handover from another eNB to the eNB 200-1, and the UE capability notification is included in the context information, the eNB 200-1 may use the UE capability notification included in the context information.

### [Third embodiment]

Hereinafter, the third embodiment will be described while focusing on the differences from the first and the second embodiments. A system configuration and an operation environment according to the third embodiment are the same as those in the first embodiment.

In the first embodiment and the second embodiment described above, a handover control was performed for the UE 100 that supports the dual connectivity scheme to establish an RRC connection with the eNB 200-1 (the macro cell), as far as possible.

On the other hand, in the third embodiment, mobility enhancement can be realized in the dual connectivity scheme by changing the roles of the MeNB and the SeNB, after starting the communication according to the dual connectivity scheme in which the eNB 200-2 (the small cell) is set as the MeNB, and the eNB 200-1 (the macro cell) is set as the SeNB.

### (1) Operation overview

In the third embodiment, by setting the eNB 200-2 as the MeNB, and the eNB 200-1 as the SeNB, the UE 100 starts the communication according to the dual connectivity scheme. Following this, a procedure for changing the roles of the MeNB and the SeNB is performed in the eNB 200-2 and the eNB 200-1.

In the third embodiment, the eNB 200-2 that is set as the MeNB transmits, to the eNB 200-1, a change request (Role change Request) requesting a change in the roles of the MeNB and the SeNB. The change request includes the information for the establishment of an RRC connection with the UE 100 by the eNB 200-1. The eNB 200-2 may decide whether or not to transmit the change request to the eNB 200-1 on the basis of at least one of the load status of the eNB 200-2, the movement status of the UE 100, and the communication status of the UE 100.

According to the procedure of changing the roles of the MeNB and the SeNB, the UE 100 is handed over from the eNB 200-2 to the eNB 200-1. During the handover, the UE 100 omits the random access procedure to the eNB 200-1.

### (2) Operation sequence

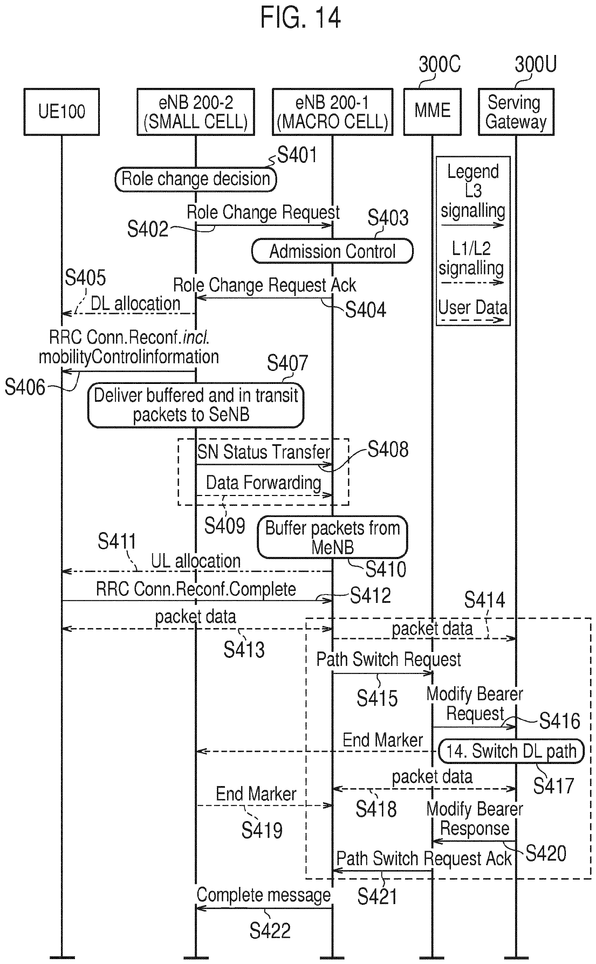

Fig. 14 is a sequence diagram illustrating an operation according to the third embodiment. In the initial state of Fig. 14, the UE 100 sets the eNB 200-2 (the small cell) as the MeNB, and the eNB 200-1 (the macro cell) as the SeNB, and performs communication according to the dual connectivity scheme.

As shown in Fig. 14, in step S401, the eNB 200-2 decides to perform a change in the roles (Role change) of the MeNB and the SeNB. The decision is taken on the basis of the movement status of the UE 100. For example, the eNB 200-2 decides that the roles of the MeNB and the SeNB are to be changed when the UE 100 changes from the stationary state to the moving state. Moreover, the eNB 200-2 can also take the decision in consideration of the load status of the eNB 200-2, the load status of the eNB 200-1, and the communication status of the UE 100.

In step S402, the eNB 200-2 transmits, to the eNB 200-1, a change request (Role change Request) requesting a change in the roles of the MeNB and the SeNB. The change request may include the RRC information (RRC Container, Context) concerning the UE 100, the E-RAB configurations, the SCG cell configuration, and the identifier of the UP architecture. Here, the E-RAB configurations may be only for signaling. The SCG cell configuration is the list and configurations of the DC special cell and SCell after the eNB 200-2 becomes the SeNB.

In step S403, the eNB 200-1 having received the change request (Role change Request) decides whether or not to approve the change request. The eNB 200-1 takes the decision in consideration of the load status of the eNB 200-1. Here, a description will be provided on the assumption that it is decided that the change request is approved.

In step S404, the eNB 200-1 transmits an acknowledgment (Role Change Request Ack) for the change request to the eNB 200-2. The acknowledgment may include the MCG cell configuration. The MCG cell configuration is the list and configurations of the PCell and SCells after the eNB 200-1 becomes the MeNB. Basically, the items set as the current SCG are inherited.

In steps S405 and S406, the eNB 200-2 transmits an RRC connection reconfiguration (RRC Conn. Reconf.) message to the UE 100 for changing the roles (Role change) of the MeNB and the SeNB. The RRC connection reconfiguration includes a set of RRC configuration parameters for dual connectivity.

Steps S407 and S410 are procedures performed in the case of the second UP architecture described above, and are used to transfer the user data of the UE 100 that is accumulated in the eNB 200-2 to the eNB 200-1.

In step S411, the eNB 200-1 assigns an uplink radio resource to the UE 100.

In step S412, the UE 100 uses the assigned uplink radio resource to transmit an RRC connection reconfiguration completion (RRC Conn. Reconf. Complete) message to the eNB 200-1. Thus, the UE 100 sets the eNB 200-1 as the MeNB. That is, the PCell of the MeNB switches from the eNB 200-2 to the eNB 200-1.

Here, since an identifier (C-RNTI: Cell Radio Network Temporary Identity) is assigned to the UE 100, and the uplink timing adjustment (TA: Timing Advance) is also complete, the UE 100 transmits an RRC connection reconfiguration completion message to the eNB 200-1 without performing the random access procedure to the eNB 200-1.

In step S413, the UE 100 transmits and receives user data to and from the eNB 200-1.

Steps S414 through S421 are procedures performed in the case of the second UP architecture described above, and are used to switch the data path connecting with the S-GW 300U from the eNB 200-2 to the eNB 200-1. More particularly, data path switching is requested from the eNB 200-1 through the MME 300C, and the S-GW300U switches the data path from the eNB 200-2 to the eNB 200-1.

In step S422, the eNB 200-1 transmits a completion message for role change of the MeNB and the SeNB, to the eNB 200-2.

### [Fourth embodiment]

Hereinafter, the fourth embodiment will be described while focusing on the differences from the first embodiment to the fourth embodiment.

In the third embodiment described above, the roles of the MeNB and the SeNB were changed, after starting the communication according to the dual connectivity scheme in which the eNB 200-2 (the small cell) is set as the MeNB and the eNB 200-1 (the macro cell) is set as the SeNB.

On the other hand, in the fourth embodiment, the roles of the MeNB and the SeNB are changed, after starting the communication according to the dual connectivity scheme in which the eNB 200-1 (the macro cell) is set as the MeNB and the eNB 200-2 (the small cell) is set as the SeNB.

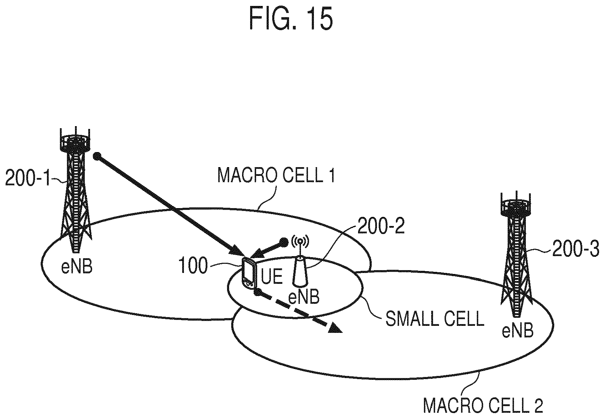

Fig. 15 is a diagram illustrating an operation environment according to the fourth embodiment.

As shown in Fig. 15, an eNB 200-1 that manages a macro cell 1, an eNB 200-2 that manages the small cell, and an eNB 200-3 that manages a macro cell 2 are provided. The small cell is arranged near the boundary of the two macro cells 1 and 2. The UE 100 moves from the overlapping region of the coverage of the macro cell 1 and the coverage of the small cell to the macro cell 2.

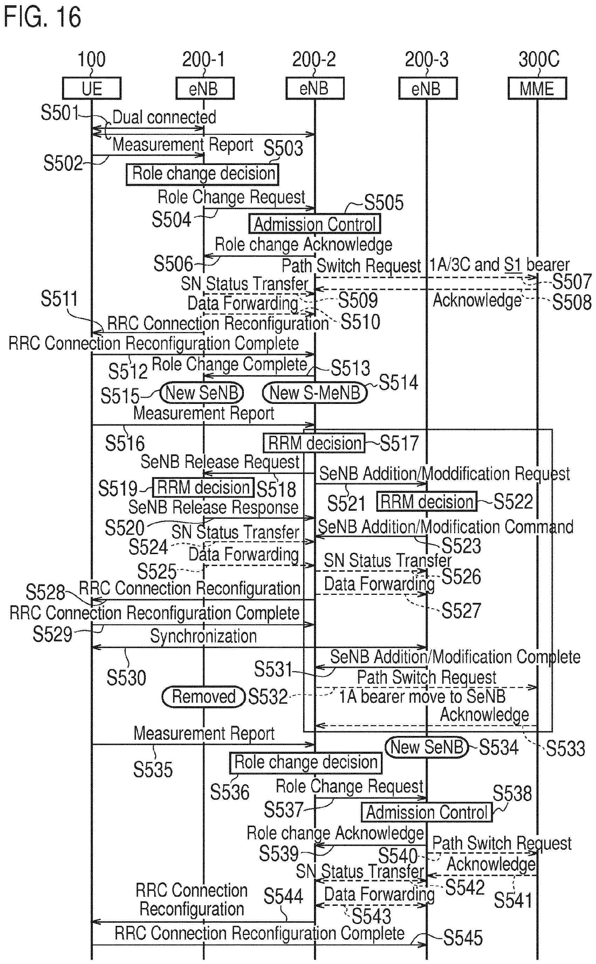

Fig. 16 is a sequence diagram illustrating an operation according to the fourth embodiment.

As shown in Fig. 16, the communication is started according to the dual connectivity scheme in which the eNB 200-1 is set as the MeNB and the eNB 200-2 is set as the SeNB (step S501).

The UE 100 transmits a measurement report to the eNB 200-1 (step S502), the eNB 200-1 decides the Role change on the basis of the measurement report (step S503), and transmits a Role Change Request to the eNB 200-2 (step S504). The eNB 200-2 approves the Role Change Request (step S505) and transmits a Role Change Request Ack to the eNB 200-1 (step S506). Moreover, data path switching (step S507, S508) and data transfer (step S509, S510) are performed in accordance with the UP architecture. In addition, the eNB 200-1 transmits an RRC Connection Reconfiguration message for the Role Change to the UE 100 (step S511). The UE 100 transmits an RRC Connection Reconfiguration Complete message to the eNB 200-2 (step S512). The eNB 200-2 transmits a Role Change Complete message to the eNB 200-1 (step S513). Thus, the eNB 200-2 is set as a new MeNB, and the eNB 200-1 is set as the new SeNB (step S514, S515).

Following this, the UE 100 transmits the measurement report to the eNB 200-2 (step S516), and on the basis of the measurement report, the eNB 200-2 decides to add an eNB 200-3 as a new SeNB (step S517). The eNB 200-2 performs an SeNB release processing between the eNB 200-2 and the eNB 200-1 (steps S518 through S520), and an SeNB addition processing between the eNB 200-2 and the eNB 200-3 (steps S521 through S523). Moreover, data transfer (steps S524, S525, S526, S527) is performed in accordance with the UP architecture. In addition, the eNB 200-2 transmits an RRC Connection Reconfiguration message for SeNB addition/release to the UE 100 (step S528). The UE 100 transmits an RRC Connection Reconfiguration Complete message to the eNB 200-2 (step S529). Moreover, the UE 100 performs a random access to the eNB 200-3, and establishes synchronism (step S530). When the eNB 200-3 detects synchronism with the UE 100, the eNB 200-3 transmits an SeNB Addition/Modification Complete message to the eNB 200-2 (step S531). Moreover, data path switching is performed (steps S532, S533) in accordance with the UP architecture. Thus, the eNB 200-1 is released from the SeNB, and the eNB 200-3 is set as the new SeNB (step S534).

Following this, the UE 100 transmits a measurement report to the eNB 200-2 (step S535), the eNB 200-2 decides the Role change on the basis of the measurement report (step S536), and transmits a Role Change Request to the eNB 200-3 (step S537). The eNB 200-3 approves the Role Change Request (step S538) and transmits a Role Change Request Ack to the eNB 200-2 (step S539). Moreover, data path switching (step S540, S541) and data transfer (step S542, S543) are performed in accordance with the UP architecture. In addition, the eNB 200-2 transmits an RRC Connection Reconfiguration message for the Role Change to the UE 100 (step S544). The UE 100 transmits an RRC Connection Reconfiguration Complete message to the eNB 200-3 (step S545). Thus, the eNB 200-3 is set as a new MeNB, and the eNB 200-2 is set as the new SeNB.

Thus, by appropriately combining and using the SeNB addition/release and Role Change, it becomes possible to support the movement of the UE 100 while continuing with the communication according to the dual connectivity system.

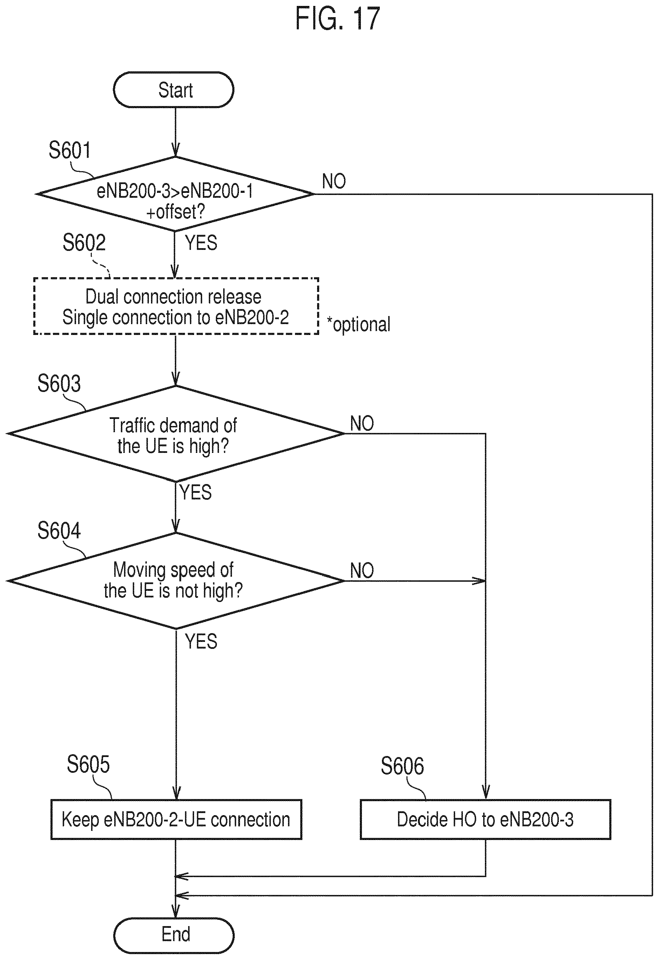

It must be noted that after the UE 100 sets the eNB 200-2 as the MeNB, the UE 100 may release the eNB 200-1 from the SeNB and normal communication may be performed. Following this, it may be decided whether to perform a handover to the eNB 200-3, or to maintain the connection with the eNB 200-2, in accordance with the communication status. Fig. 17 is a flow diagram illustrating the modification.

As shown in Fig. 17, in step S601, the eNB 200-2 that establishes an RRC connection with the UE 100 decides whether or not the reception level of the eNB 200-3 in the UE 100 is larger than the value that adds an offset to the reception level of the eNB 200-1, on the basis of the measurement report. In the case of "YES" in step S601, the dual connectivity is canceled, and the UE 100 establishes a single connection with the eNB 200-2 (step S602).

In this state, if the amount of traffic transmitted and received by the UE 100 is large (step S603; YES), and the movement speed of the UE 100 is not high (step S604; YES), the eNB 200-2 maintains the state of the single connection (step S605). On the other hand, if the amount of traffic transmitted and received by the UE 100 is not large (step S603; NO), or the movement speed of the UE 100 is high (step S604; NO), the eNB 200-2 decides the handover to the eNB 200-3 (step S606).

### [Fifth embodiment]

Hereinafter, the fifth embodiment will be described while focusing on the differences from the first embodiment to the fourth embodiment. A system configuration and an operation environment according to the fifth embodiment are the same as those in the first embodiment.

### (1) Operation overview

The communication control method according to the fifth embodiment is a method for controlling communication according to the dual connectivity scheme that uses an MeNB 200-M that establishes an RRC connection with the UE 100, and an SeNB 200-S that provides additional radio resources to the UE 100.

The communication control method according to the fifth embodiment includes a step A of detecting a failure of the radio link (an RLF) with a cell of the SeNB 200-S, by the UE 100, and a step B of transmitting a report regarding the RLF (an RLF Report) to the MeNB 200-M, by the UE 100. The SeNB 200-S manages the SCG that is made of a plurality of cells associated with the UE 100. The plurality of cells includes a special cell (Special Cell) in which the PUCCH of the UE 100 is set. If the cell in which a failure is detected is the Special Cell, then in step B, the UE 100 adds the Special Cell information to the RLF Report. Thus, the MeNB 200-M can understand whether or not the cell in which an RLF has occurred in the SeNB 200-S is the Special Cell.

The communication control method according to the fifth embodiment further includes a step of causing the UE 100 to stop uplink transmission to the SCG (the plurality of cells), by the MeNB 200-M, when the RLF Report includes the Special Cell information. Thus, the UE 100 can avoid interference by uplink transmission when it becomes difficult to continue communicating with the SeNB 200-S.

### (2) Operation sequence

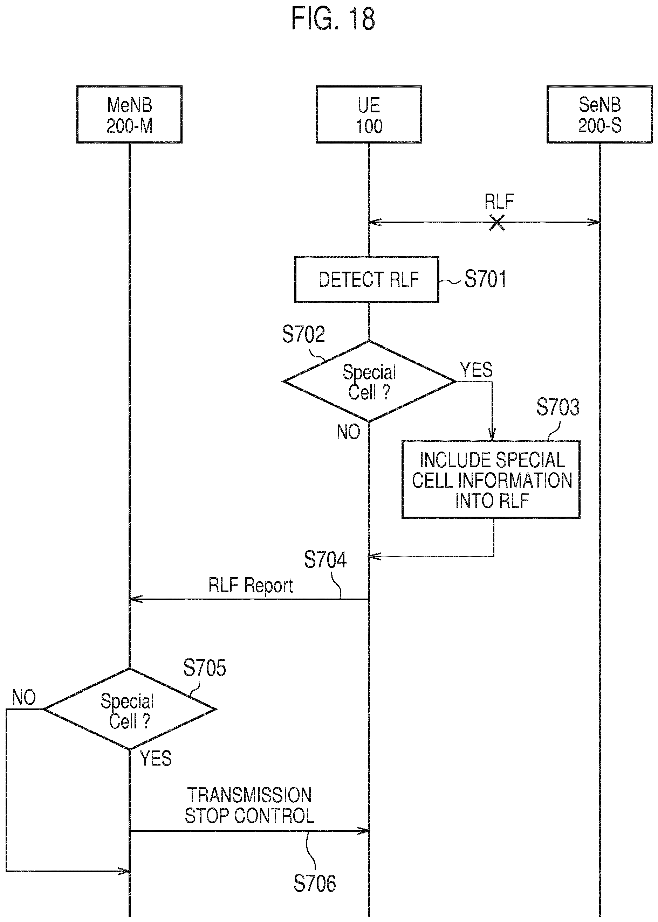

Fig. 18 is a sequence diagram illustrating an operation according to the fifth embodiment. In the initial state of Fig. 18, the UE 100 performs communication according to the dual connectivity scheme with the MeNB 200-M and the SeNB 200-S.

As illustrated in Fig. 18, in step S701, the UE 100 detects an RLF in the SCG.

In step S702, the UE 100 decides whether or not the cell in which the RLF is detected is a Special Cell. If the cell in which the RLF is detected is the Special Cell, the UE 100 adds the Special Cell information to the RLF Report (step S703). The Special Cell information, for example, is a one-bit flag in which "1" is set if the cell in which the RLF is detected is the Special Cell.

In step S704, the UE 100 transmits an RLF Report to the MeNB 200-M. It must be noted that the UE 100 transmits the RLF Report to the MeNB 200-M even when there is no RLF transmission request from the MeNB 200-M.

In step S705, the MeNB 200-M having received the RLF Report decides whether or not the RLF Report includes the Special Cell information.

If the RLF Report includes the Special Cell information, then in step S706, the MeNB 200-M transmits configuration information, to the UE 100, causing the UE 100 to stop uplink transmission to the SCG (the plurality of cells). The UE 100 stops uplink transmission to the SCG (the plurality of cells) in accordance with the reception of the configuration information.

On the other hand, if the RLF Report does not include the Special Cell information, the MeNB 200-M uses the RLF Report for the purpose of network optimization (SON), without causing the UE 100 to stop uplink transmission to the SCG (the plurality of cells).

### (3) Other operations

The UE 100 must also preferably report physical layer problems, such as an out-of-sync state of a physical layer (out of sync), to the MeNB 200-M.

Moreover, the UE 100 must preferably not start an RRC reestablishment when an SCG failure is detected. However, according to the stipulation in the current specifications, if the AS security is active, the UE 100 starts an RRC reestablishment. An active AS security implies integrity protection with respect to the SRB, and concealment with respect to the SRB and DRB. The procedures of RRC reestablishment include the procedure of making the configurations for integrity protection and concealment.

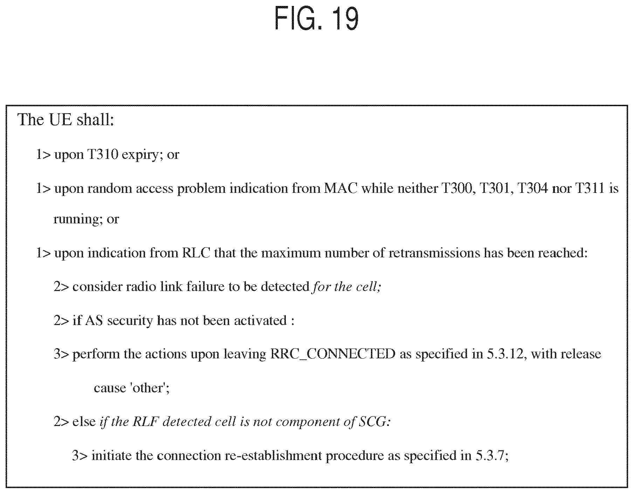

However, it is not rational to do away with the configurations for AS security only for avoiding an RRC reestablishment. Thus, by adding a few changes to the current specifications, the concerned problem can be resolved. Fig. 19 is a diagram illustrating another operation according to the fifth embodiment. As illustrated in Fig. 19, when the RLF conditions (any one from the first row to the third row) are met, the UE 100 decides if the cell in which the RLF is detected is a cell of the SCG, and if the cell in which the RLF is detected is not a cell of the SCG, the UE 100 starts RRC reestablishment.

In addition, in the sequence according to the fifth embodiment, the RLF Report made use of the existing RLF Report, however, there is no need of including all information elements included in the existing RLF Report, and at least the cell ID alone may be included. Moreover, the inclusion of the cause of the RLF (t310Expiry, randomAccessProblem, rlc-MaxNumRetx) is beneficial.

### [Other Embodiments]

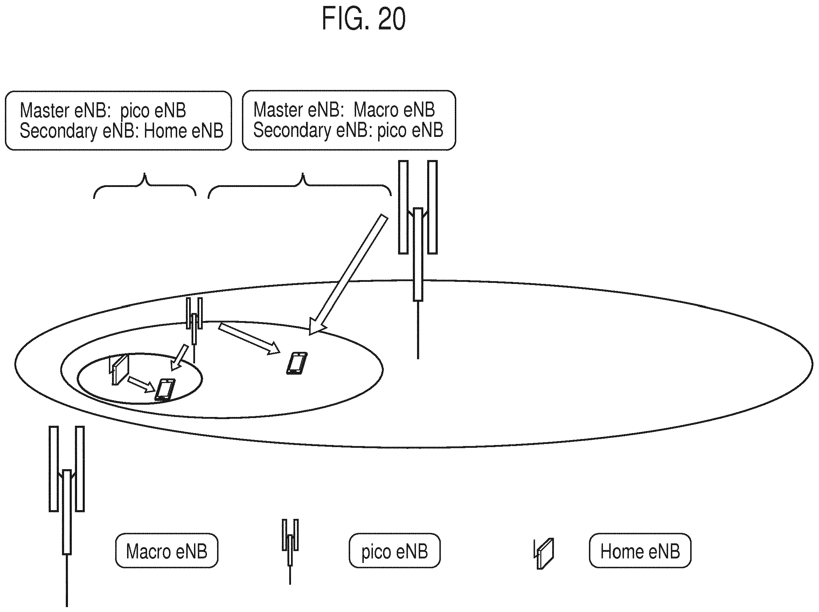

In the embodiments described above, a case in which communication is performed according to the dual connectivity scheme by combining together a macro cell and a small cell was illustrated. However, the present invention is not restricted to such a combination, and communication according to the dual connectivity scheme may be performed by combining together a macro cell and a pico cell, or by combining together a pico cell and a femto cell, as shown in Fig. 20.

In the embodiments described above, a dual connectivity scheme based on a pair of eNBs (MeNB and SeNB) was illustrated, but the present invention can be applied to a dual (multiplex) connectivity scheme based on three or more eNBs. In such a case, the processing concerning step S518 (SeNB Release) of Fig. 16 need not be performed.

Furthermore, in the embodiment described above, although an LTE system is described as an example of a mobile communication system, the present invention is not limited to the LTE system, and may be applied to a system other than the LTE system.

### [Additional statement 1]

It has agreed to use option C1 as the baseline CP architecture for inter-eNB CA in the SI. One aspect of the inter-eNB CA that needs to be resolved is the handling of RLF conditions. This Additional statement discussed the issues of RLF related to RLM of SeNB, inter-eNB CA activation and RACH failure.

### (Discussion)

Both inter-eNB CA and intra-eNB CA have the benefit of increasing user-throughput by allowing the UE to connect simultaneously to multiple cells. It has already been clarified in the SI that both the MeNB and the SeNB can have its own serving cells belonging to MCG and SCG, respectively. To prevent unnecessary complexity for both the UE and the NW it would be preferable for the CP architecture of intra-eNB CA to be reused in inter-eNB CA's CP architecture as much as possible. However, the reuse of the intra-eNB CA procedures should be done with caution to prevent any significant degradation to inter-eNB CA performance. In the RLF discussions below, RLF related issues for inter-eNB CA are discussed in context of the existing procedure for intra-eNB CA.

### ▪ RLM of the special cell within the SCG

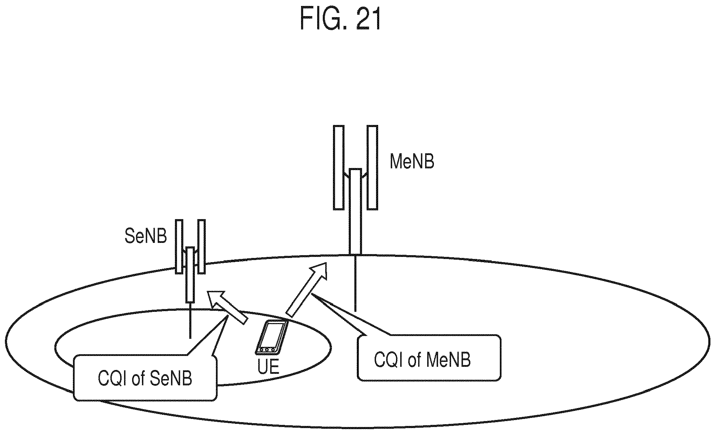

In intra-eNB CA, RLM isn't supported on the SCell since PCell uses CQI and measurement reports to determine the status of the SCell, including addition/activation and possible RLF. In inter-eNB CA, the situation isn't as simple, since it is assumed that the SeNB has its own scheduler and the latency in the Xn interface may be excessive, it's reasonable for the UE to send CQI to the MeNB and the SeNB. This concept is described in Fig.21. In Fig.21, UE sends each CQI to both MeNB and SeNB. Furthermore, it has already been decided that once dual connectivity is established with an SeNB, a Special Cell will be configured and activated at all times. If RLM is only applied to the MeNB, the UE will not be able to monitor the quality of the Special Cell and trigger the necessary actions. Even if the UE will not trigger RLF as a result of radio link failure with only the Special Cell, it would adversely affect the QoS for the UE if the SeNB is no longer available as part of dual connectivity; therefore, RLM of the Special Cell should be supported. It may be assumed that the RLF with the SeNB will be based only on the Special Cell.

Proposal 1: As a baseline, UE should send CQI to the MeNB and the SeNB.

Proposal 2: UE should also apply RLM to the SeNB.

If Proposal 2 is agreeable, it will also be necessary to determine whether the MeNB needs to know the status of the RLM. As It would be necessary for the MeNB to remove the SeNB as soon as possible to prevent the UE from sending further SRS to the SeNB in case UL transmission to the SeNB is also allowed. Additionally, if the MeNB knows the RLF status of the SeNB, the MeNB could configure the UE with measurement of other candidate inter-frequency SeNBs. Although either SeNB or UE may inform the MeNB of the SeNB's RLF status, in case the backhaul latency is excessive, it may be preferable for the UE to provide the SeNB's RLF status to the MeNB.

Proposal 3: MeNB should be notified of the SeNB's RLF status.

Assuming Proposal 3 is agreed, it is also necessary to determine the form of the notification of the SeNB's RLF status to the MeNB. One possibility would be for the UE or the SeNB to send indication to the MeNB only after the UE has declared RLF with the SeNB. However, it may also be beneficial for the MeNB to obtain the CQI information of the SeNB to better monitor the link to the SeNB since the MeNB is responsible for the addition/removal/switching of the SeNB. Since Alt 3C with bearer split option is already agreed as one of the two UP architectures, it would be up to the MeNB to determine the traffic that would be steered toward the SeNB. Having the CQI of the SeNB would also be beneficial for the MeNB to decide the management of the bearer split.

Proposal 4: As a baseline, UE should send CQI of the SeNB to the MeNB. It is FFS whether additional information from CSI is also needed.

### (Inter-eNB CA activation)

The activation of inter-eNB CA should also be considered based on Option C1. If the UE is initially camped on a small cell, the small cell will likely need to handover the UE to the MeNB prior to inter-eNB CA since the UE should only have RRC connection with the MeNB. One way to avoid the need for the handover from the small cell to the MeNB prior to inter-eNB CA is to ensure that the UE always camp on MeNB since only the MeNB will configure inter-eNB CA. However, since the small cell has to support legacy UEs, it must be able to support legacy UEs as a standalone cell. So it may be difficult to prevent UEs from camping on small cells. It is FFS whether further enhancements are needed for the Cell Reselection procedure for inter-eNB CA capable UEs or if other enhancements are needed in the Connected mode to prevent excessive handovers.

Proposal 5: it should consider whether enhancements are needed for Cell Reselection procedure for inter-eNB CA capable UEs or if other enhancements are needed in the Connected mode to prevent excessive handovers.

### (RACH)

Currently for intra-eNB CA, RAR is only sent from the PCell; however, this is based on the ideal backhaul which isn't the case for inter-eNB CA. In inter-eNB CA, if we assume that the UE can transmit to both MeNB and SeNB, then the UE will send a RACH preamble to the SeNB. However, if the UE can only receive RAR from the MeNB, depending on the latency of the Xn interface, this may adversely affect how the network can adequately determine the proper value for the T300 timer. Therefore, it would be better to allow the SeNB to send the RAR to the UE. If the RAR is sent from the MeNB then it is also necessary for the MeNB to know the RACH status, in particular, if the RACH fails since the MeNB is responsible for configuring inter-eNB CA. Then the SeNB or the UE should inform the MeNB of RACH failures.

Proposal 6: When the UE sends RACH preamble to the SeNB, the SeNB should send the RAR to the UE.

Proposal 7: The SeNB or the UE should inform the MeNB of RACH failures.

### [Additional statement 2]

### (Introduction)

Random access failure and RLC failure associated with the SCG were agreed, but the need for informing the MeNB of physical layer problem with the SCG is still FFS. This contribution provides further analysis on the necessity of this information along with suggestions for identifying the physical layer problem without the need for initiating re-establishment.

### (Informing MeNB of physical layer problem of SeNB)

The following agreements are achieved.
- At least the following, uplink control information (UCI) related to the PDSCH/PUSCH operation in SCG is transmitted to the SeNB only.
   ▪ HARQ-ACK for PDSCH of SCG cells
   ▪ Periodic and aperiodic CSI of SCG cells
- HARQ-ACK and CSI related to MCG is transmitted to the MeNB only
- In SCG, the UCI transmission rules as in Rel-11 are supported, with the Pcell replaced by the pSCell:
   ▪ Physical channel (PUCCH or PUSCH) in which UCI is transmitted
   ▪ Selection of the cell in which UCI is transmitted in case of UCI on PUSCH
   ▪ Selection of PUCCH resources for HARQ-ACK
   ▪ Periodic CSI dropping rules
   ▪ Handling of UCI combinations
   ▪ HARQ-ACK timing and multiplexing

Confirmation: As a baseline, UE should send the CQI related to the MCG to the MeNB and the CQI related to the SCG to the SeNB.

### Random Access Problem

UE shall inform MeNB of random access failure associated with an SCG cell at least for the special Scell. FFS for other SCells of the SCG,

### RLC failure

UE shall inform MeNB of RLC failure associated with an SCG cell.

### Physical layer problem

FFS whether UE shall inform MeNB of physical layer problem (L1 out of sync, like for PCell).

The main objective to inform MeNB of physical layer problem in the SeNB is to ensure that the UE does not continue to transmit on the uplink (e.g. upon RLF).

In order for the MeNB to know of physical layer problem in the SeNB, RAN2 has 2 alternatives.

### Alt1. SeNB informs the problem to MeNB

Alt2. UE Reports physical layer problem of SeNB to MeNB e.g. using N310 and T310

With Alt 1, since the MeNB learns of the physical layer problem from the SeNB, there may be delay associated with this information due to the uncertainty of the delay over X2 interface. So from the perspective of stopping UL Tx to the SeNB, this alternative may not be ideal. With Alt. 2, the UE may directly report the physical layer problem to the MeNB e.g. when T310 timer expires, but this does involve increased amount of uplink signalling in comparison with Alt.1 Since RLM of SCG is already agreed, it is reasonable to adopt Alt2.

Proposal 1: UE shall inform MeNB of physical layer problem based on RLM of the SeNB.

### (Preventing RRC-re-establishment with RLF of SeNB)

As agreed in the previous meeting, the UE shall not trigger RRC re-establishment when detecting SCG failure. In current specification, UE initiates RRC-reestablishment upon T310 expiry, if AS security has been activated. It is not reasonable that RAN node does not configure AS security just to avoid the initiation of connection re-establishment. Impact to current specification may be avoided by making slight changes to the existing specification as indicated below:

### The UE shall:

1>upon T310 expiry; or
1>upon random access problem indication from MAC while neither T300, T301, T304 nor T311 is running; or
1>upon indication from RLC that the maximum number of retransmissions has been reached:
   2>consider radio link failure to be detected if the cell is not a component of the SCG;
   2>if AS security has not been activated:
      3>perform the actions upon leaving RRC_CONNECTED as specified in 5.3.12, with release cause 'other';
2>else if the RLF detected cell is not a component of the SCG:
   3>initiate the connection re-establishment procedure as specified in 5.3.7;

Proposal 2: T310 timer is applicable to RLM of the SCG, but that re-establishment is not triggered as a result of T310 expiry.

### (Reporting failure associated with SCG to MeNB)

To prevent unnecessary complexity for both the UE and the NW it would be preferable to reuse the current specification as much as possible. From reusing stand point, VarRLF-Report is the similar way to report the failure associated with the SCG It is not needed to reuse all messages included in the report. At least cell id of the SCG must be included in the report. It may be beneficial to include rlf-Cause (t310Expiry, randomAccessProblem, rlc-MaxNumRetx) based on the existing specification.

### Proposal 3: The report should include cell ID of SeNB and cause of the RLF.

RLF-report is sent to MeNB if MeNB sends UE information Request in current specification. However this report should be sent to MeNB immediately for avoidance of uplink interference if UE detect such kind of physical layer problem. According to the current specification the rlf-InfoAvailable is only included as part of the 3 messages: RRCConnectionSetupComplete, RRCConnectionReconfigurationComplete, RRCConnectionReestablishmentComplete. However, since the radio link problem of SCG does not trigger RLF or re-establishment, there is no means for the UE to indicate the availability of VarRLF-report to the MeNB. Since the MeNB should be informed of the radio link problem of the SCG right away, it should be possible for the UE to indicate the availability of the VarRLF-report immediately based on the expiry of the T310 timer at the SCG.

Proposal 4: we should consider new procedure to send SCG RLF report to MeNB after the UE detects the problems (RACH, RLC, T310 ...).

### [Cross Reference]

The entire contents of US Provisional Application No. 61/934209 (filed on January 31, 2014) and US Provisional Application No. 61/956000 (filed on March 20, 2014) are incorporated herein by reference.

### INDUSTRIAL APPLICABILITY

The present invention is useful for communications field such as mobile communications.

## Claims

1. A communication control method for controlling a dual connectivity communication using a master base station that establishes a RRC connection with a user terminal and a secondary base station that provides additional radio resources to the user terminal, comprising:
a step A of detecting a failure of radio link with a cell of the secondary base station, by the user terminal; and
a step B of transmitting a report regarding the failure, from the user terminal to the master base station, wherein
the secondary base station manages a secondary cell group consisting of a plurality of cells associated with the user terminal,
the plurality of cells includes a special cell with which a physical uplink control channel of the user terminal is established,
in the step B, the user terminal add information regarding the special cell to the report when the cell in which the failure is detected is the special cell.

2. The communication control method according to claim 1, wherein
in the step A, the user terminal detects failure of radio link with only the special cell from among the plurality of cells consisting the secondary cell group.

3. The communication control method according to claim 1 or 2, wherein
in the step B, the user terminal autonomously transmits the report the master base station even if the user terminal does not receive a report request from the master base station.

4. A user terminal to which additional radio resources are allocated by a secondary base station, and configured to establish a RRC connection with a master base station and perform a dual connectivity communication, comprising:
a controller configured to detect a failure of radio link with a cell of the secondary base station, and transmit a report regarding the failure to the master base station, wherein
a secondary cell group is managed by the secondary base station, a secondary cell group consisting of a plurality of cells associated with the user terminal,
the plurality of cells includes a special cell with which a physical uplink control channel of the user terminal is established,
the controller is further configured to add information regarding the special cell to the report when the cell in which the failure is detected is the special cell.

5. A base station that establishes an RRC connection with a user terminal, comprising
a controller configured to determine whether to switch the RRC connection with the user terminal to neighboring base stations on the basis of whether the user terminal supports a dual connectivity scheme in which connections with a plurality of base stations are simultaneously established.

6. The base station according to claim 5, further comprising
a receiver configured to receive a terminal capability notification from the user terminal, wherein
the terminal capability notification includes information indicating whether or not the user terminal supports the dual connectivity scheme.

7. The base station according to claim 5, wherein
the base station is a specific base station having narrower coverage compared with a general base station,
the general base station is included in the neighboring base stations, and
the controller is further configured to decide to switch the RRC connection of the user terminal to the general base station in accordance with the user terminal supporting the dual connectivity scheme.

8. The base station according to claim 7, further comprising:
a storage configured to store an identifier of a cell of the general base station;
and
a receiver configured to receive a measurement report from the user terminal,
wherein
the controller is further configured to decide to switch the RRC connection of the user terminal to the general base station when the identifier of the cell of the general base station is included in the measurement report and the user terminal supports the dual connectivity scheme.

9. The base station according to claim 7, wherein
the controller is further configured to decide whether to switch the RRC connection of the user terminal to the general base station on the basis of at least one of: a load status of the base station, a movement status of the user terminal, a communication status of the user terminal, and a backhaul delay, in addition to whether or not the user terminal supports the dual connectivity scheme.

10. The base station according to claim 5, wherein
the base station is a general base station having wider coverage compared with a specific base station,
the specific base station is included in the neighboring base stations, and
the controller is further configured to decide to not switch the RRC connection of the user terminal to the specific base station in accordance with the user terminal supporting the dual connectivity scheme.

11. The base station according to claim 10, further comprising:
a storage configured to store an identifier of a cell of the specific base station;
and
a receiver configured to receive a measurement report from the user terminal,
wherein
the controller is further configured to decide to not switch the RRC connection of the user terminal to the specific base station when the identifier of the cell of the specific base station is included in the measurement report and the user terminal supports the dual connectivity scheme.

12. The base station according to claim 11, wherein
the controller is further configured to decide to start communication according to the dual connectivity scheme together with the specific base station without switching the RRC connection of the user terminal to the specific base station when the identifier of the cell of the specific base station is included in the measurement report and the user terminal supports the dual connectivity scheme.

13. The base station according to claim 10, wherein
the controller is further configured to decide whether to switch the RRC connection of the user terminal to the specific base station on the basis of at least one of: a load status of the base station, a movement status of the user terminal, a communication status of the user terminal, and a backhaul delay, in addition to whether or not the user terminal supports the dual connectivity scheme.

14. A communication control method comprising:
a step A of starting, by a user terminal, communication according to a dual connectivity scheme, by setting a first base station as a master base station and setting a second base station as a secondary base station; and
a step B of performing a procedure for changing roles of the master base station and the secondary base station, between the first base station and the second base station, wherein
the master base station is a base station that establishes an RRC connection with the user terminal in the dual connectivity scheme, and
the secondary base station is a base station that provides additional radio resources to the user terminal in the dual connectivity scheme.

15. The communication control method according to claim 14, wherein
the first base station is a specific base station having narrower coverage compared with a general base station, and
the second base station is the general base station.

16. The communication control method according to claim 14, wherein
the step B comprises: a step of transmitting a change request for requesting change of the roles to the second base station, from the first base station set as the master base station.

17. The communication control method according to claim 16, wherein
the first base station decides whether to transmit the change request to the second base station, on the basis of at least one of: a load status of the first base station, a movement status of the user terminal, and a communication status of the user terminal.

18. The communication control method according to claim 14, wherein
the change request includes information for establishing an RRC connection with the user terminal by the second base station.

19. The communication control method according to claim 14, wherein
the step B comprises: a step of performing a handover of the user terminal from the first base station to the second base station, and
in the handover, the user terminal omits a random access procedure to the second base station.

20. The communication control method according to claim 14, wherein
the first base station is a general base station, and
the second base station is a specific base station having narrower coverage compared with the general base station.

21. The communication control method according to claim 14, further comprising
a step of releasing the first base station set as the secondary base station, by the second base station set as the master base station, after changing the roles.
